Europäisches Patentamt

European Patent Office

Office européen des brevets

(11) Veröffentlichungsnummer: **0 316 603**
**A1**

## EUROPÄISCHE PATENTANMELDUNG

(21) Anmeldenummer: **88117436.1**

(51) Int. Cl.⁴: **H04N 11/04**

(22) Anmeldetag: **19.10.88**

(30) Priorität: **20.11.87 DE 3739288**

(43) Veröffentlichungstag der Anmeldung:
**24.05.89 Patentblatt 89/21**

(84) Benannte Vertragsstaaten:
**DE FR GB IT NL SE**

(71) Anmelder: **ROBERT BOSCH GMBH**
**Postfach 10 60 50**
**D-7000 Stuttgart 10(DE)**

(72) Erfinder: **Vollmer, Rudolph, Dr.-Ing.**
**Bergfeldstrasse 21**
**D-3201 Barienrode(DE)**

(54) **Verfahren zur Digitalen Übertragung von MAC-Fernsehsignalen, sowie Schaltungsanordnung dafür.**

(57) Verfahren zur digitalen Übertragung von MAC-Fernsehsignalen, die einen Datenburst, ein Chrominanzsignal, ein Luminanzsignal, eine Klemmphase sowie mehrere Übergangsbereiche innerhalb eines Zeilensignales umfassen. Es wird vorgeschlagen, zumindest lediglich den Datenburst, das Chrominanzsignal und das Luminanzsignal digital zu übertragen, und auf die Übertragung der Klemmphase sowie der Übergangsbereiche zu verzichten. Die Klemmphase und die Übergangsbereiche sind nämlich bekannt bzw. berechenbar und können daher auf der Empfangsseite in digitaler Form zur Bildung des kompletten Zeilensignals in das übertragene Zeilensignal eingefügt werden. Dadurch wird insgesamt eine Datenreduktion erreicht, die zu einer Übertragungsrate von kleiner oder gleich 135,168 Mbit/s führt, womit die Übertragung unterhalb der Nettodatenrate des H4-Kanals erfolgen kann, so daß sich für die Übertragung die vorhandenen Post-Multiplexer einsetzen lassen.

EP 0 316 603 A1

Fig. 4

## Verfahren zur digitalen Übertragung von MAC-Fernsehsignalen, sowie Schaltungsanordnung dafür

Die Erfindung betrifft ein Verfahren zur digitalen Übertragung von MAC-Fernsehsignalen gemäß dem Oberbegriff des Patentanspruchs 1. Außerdem befaßt sich die Erfindung mit einer Schaltungsanordnung gemäß dem Oberbegriff des Patentanspruchs 14.

Das Problem der Übertragung von Fernsehsignalen tritt in der Praxis in vielfältiger Form auf. Dabei müssen einerseits die im Einzelfall zu übertragenden Informationen, wie beispielsweise Schwarz-Weiß-Fernsehen, Farbfernsehen, Begleitton, beachtet werden, und andererseits muß Rücksicht auf die jeweilige Struktur des Nachrichtennetzes (Punkt-zu-Punkt-Übertragung oder Rundfunksysteme) genommen werden. Außerdem richten sich die Übertragungsverfahren nach dem jeweils zur Übertragung zur Verfügung stehenden Medien, wie beispielsweise Kabel, Funk oder Glasfaserleitung.

Einen besonderen Rang genießt die digitale Übertragung von Fernsehsignalen, weil sich digitale Signale im Gegensatz zu analogen Signalen immer wieder fehlerfrei regenerieren lassen, so daß auch bei langen Übertragungsstrecken keine Qualitätsverluste auftreten. Deshalb sind die Bestrebungen auch ganz allgemein darauf ausgerichtet, bei künftigen Kommunikationsdiensten überwiegend digitalisierte Übertragungsverfahren zu benutzen, und es sind für die Übertragung digitalisierter Fernsehsignale auch bereits Normen vorgeschlagen, welche die pro Kanal übertragbare Datenrate festlegen.

Die entsprechenden Vorschläge lassen bei den beabsichtigten Glasfasernetzen der Deutschen Bundespost eine Nettoübertragungsrate im sogenannten H4-Kanal von 135,168 Mbit/s erwarten. Um eine wirtschaftliche Ausnutzung der Übertragungsnetze zu ermöglichen, ist es bei einer digitalen Übertragung von Fernsehsignalen erstrebenswert, eine Datenreduktion vorzunehmen, um das Fernsehsignal mit einer geringeren Datenrate über tragen zu können, als sie sich bei normaler Digitalisierung ergeben würde, ohne daß dabei Qualitätseinbußen entstehen.

Durch die DE-OS 35 45 322 ist bereits ein System zur Übertragung von Fernsehinformationen bekannt, welches bei einer digitalen Übertragung von D2-MAC-Fernsehsignalen eine Übertragungsrate von 137,5 Mbit/s ermöglicht, d.h. dort erfolgt schon eine Datenreduktion von ca. 162 Mbit/s auf den genannten Wert von 137,5 Mbit/s. Bei D-MAC-Fernsehsignalen sowie bei C-MAC-Fernsehsignalen ermöglicht das bekannte System eine Übertragungsrate von 139,0 Mbit/s.

Das bekannte System gemäß der DE-OS 35 45 322 schafft also bereits eine erhebliche Datenreduktion, allerdings muß dabei berücksichtigt werden, daß für die Realisierung eine spezielle Hardware in Form der benötigten Multiplexer erforderlich ist, daß sich also die im Breitband-Kommunikationsnetz der Deutschen Bundespost verwendeten Multiplexer nicht einsetzen lassen. Das bevorzugte Anwendungsgebiet des bekannten Systems liegt daher von der Zielsetzung her bei privaten Anwendern und bei lokalen Übertragungsnetzen, die losgelöst von den öffentlichen Kommunikationsnetzen der Deutschen Bundespost verwendet werden können. Dabei kommt es dann auch nicht darauf an, die Übertragung in der von der Deutschen Bundespost geforderten "Prozedur" durchzuführen.

Demgegenüber verfolgt die Erfindung das Ziel einer wirtschaftlichen digitalen Übertragung von MAC-Fernsehsignalen innerhalb des Postnetzes, ohne daß der Einsatz besonderer Multiplexer erforderlich ist. Von Seiten der Rundfunkanstalten sind auch schon Bestrebungen vorhanden, möglichst bald das D2-MAC-Fernsehsignal in dem Studio aus den RGB-Bildsignalen und den digitalen Ton- und Steuerdaten zu generieren und vom Studio aus das komplette D2-MAC-Fernsehsignal an eine Erdefunkstelle zu geben. Da im D2-MAC-Coder die Verarbeitung der Fernsehsignale digital erfolgt, ist es wünschenswert, das Basisbandsignal in seiner digitalen Form direkt über eine Glasfaserleitung zu übertragen. Schließlich ist auch eine Glasfaserverteilung an die Endteilnehmer in einem künftigen Glasfaser-Breitband-Kommunikationsnetz wünschenswert.

Der Erfindung liegt daher die Aufgabe zugrunde, ein Verfahren zur digitalen Übertragung von MAC-Fernseh signalen zu schaffen, welches der obigen Zielrichtung Rechnung trägt, und welches sich problemlos in ein künftiges Glasfaser-Breitband-Kommunikationsnetz "integrieren" läßt, so daß die Post-Multiplexer verwendbar sind und keine spezielle Hardware erforderlich ist.

Die Lösung dieser Aufgabe erfolgt bei dem im Oberbegriff des Anspruchs 1 genannten Verfahren durch die im kennzeichnenden Teil angegebenen Verfahrensschritte, und bezüglich der Schaltungsanordnung gemäß dem Oberbegriff des Anspruchs 16 wird die Aufgabe durch die Merkmale des kennzeichnenden Teils dieses Anspruchs gelöst.

Die Erfindung geht von der Zielvorgabe aus, daß die Nettoübertragungsrate im H4-Kanal bei 135,168 Mbit/s liegen wird, wobei dann für die Übertragung keine speziellen Multiplexer erforderlich sind, um das Fernsehsignal mit der Bruttodatenrate des H4-Kanals (in der Bundesrepublik Deutschland vermutlich

2

139,264 Mbit/s) zu übertragen.

Es wird also bei der Erfindung eine weitere Datenreduktion vorgenommen, so daß sich die voranstehend an gegebenen Übertragungsraten erzielen lassen. Dabei basiert das neue Verfahren auf der Überlegung, daß ein MAC-Fernsehsignal normgemäß bestimmte Bereiche umfaßt, deren Werte berechenbar bzw. konstant vorgegeben sind. Wenn nun diese Werte auf der Empfängerseite berechnet werden bzw. als konstante Signalgrößen zugefügt werden, kann auf die Übertragung der entsprechenden Signalanteile verzichtet werden, wodurch die angestrebte weitere Datenreduktion erzielt wird. Daher werden die berechenbaren Werte der Klemmphase und einiger oder aller Übergangsbereiche überhaupt nicht übertragen, sondern auf der Empfängerseite berechnet und in das empfangene Fernsehsignal eingefügt.

In der beschriebenen Weise läßt sich ohne weiteres eine Nettoübertragungsrate im H4-Kanal von kleiner oder gleich 135,168 Mbit/s erzielen, so daß für die Übertragung keine speziellen Multiplexer nötig sind.

Zweckmäßige Ausgestaltungen und vorteilhafte Weiterbildungen der Erfindung sind in den Unteransprüchen angegeben. Zum besseren Verständnis wird die Erfindung nachfolgend an Hand der in der Zeichnung dargestellten Ausführungsbeispiele näher erläutert. Es zeigen:

Fig. 1 ein Zeilensignal eines D2-MAC-Fernsehsignals,

Fig. 2 ein Zeilensignal eines D-MAC-Fernsehsignals,

Fig. 3 ein Zeilensignal eines C-MAC-Fernsehsignals,

Fig. 4 ein Blockschaltbild eines Coders zur Umwandlung eines D2-MAC-Fernsehsignals in eine digitalisiertes Signal, welches über eine Glasfaserleitung übertragen werden soll, und

Fig. 5 ein Blockschaltbild eines Decoders zur Umwandlung der empfangenen digitalisierten Daten in ein D2-MAC-Fernsehsignal.

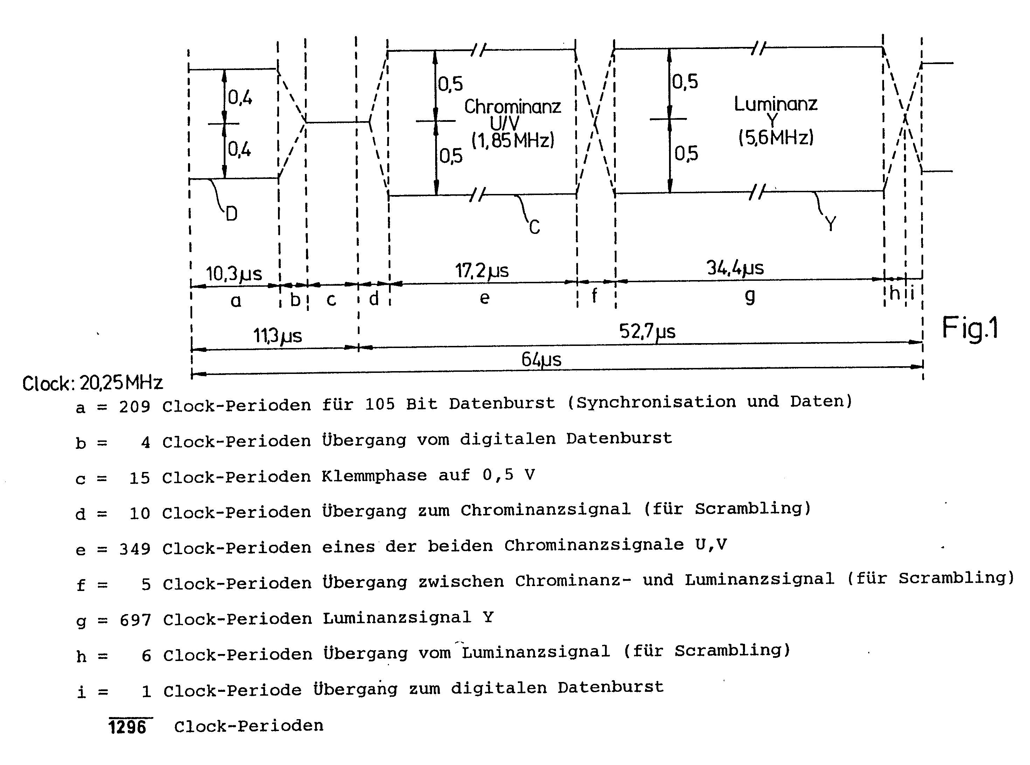

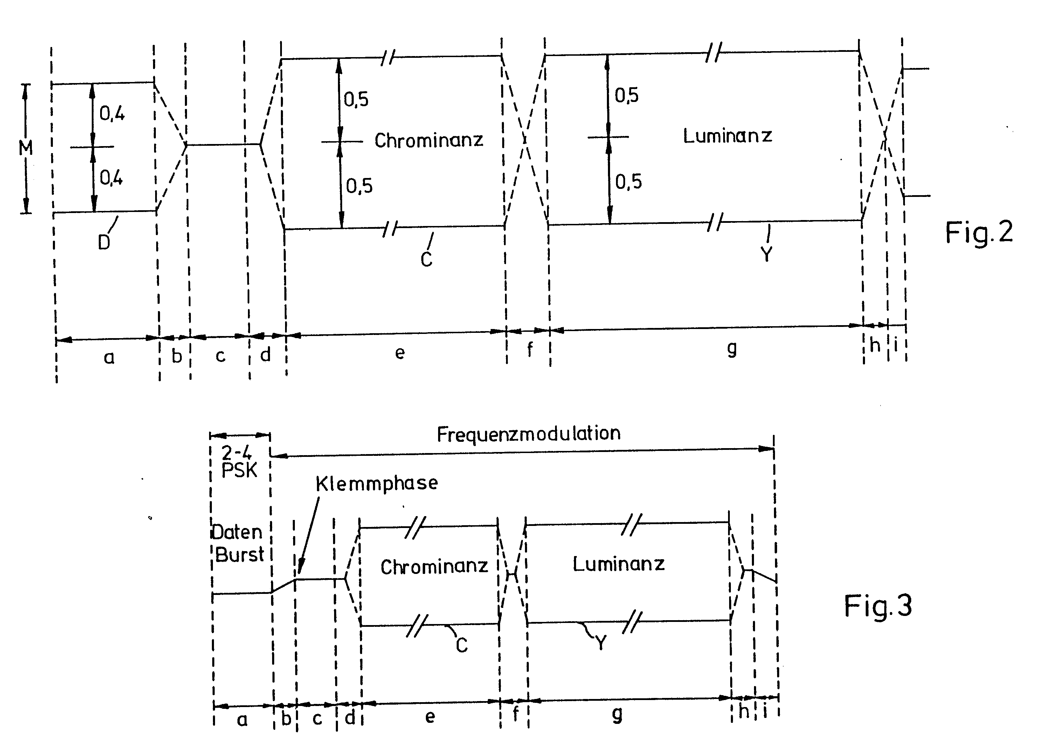

Anhand von Fig. 1 - 3 werden nachfolgend zum besseren Verständnis zunächst die Zeilensignale von D2-MAC (Fig.1), D-MAC (Fig. 2) und C-MAC (Fig. 3) Fernsehsignalen erläutert, die jeweils Bereiche a - i umfassen. Am An fang einer Zeile steht der Datenburst D ( Bereich a), der bei D2-MAC eine Datenrate von 10,125 Mbit/s beinhaltet, so daß während einer Zeile in der hierfür zur Verfügung stehenden Zeitspanne von 10,3 μs genau 105 Bit übertragen werden können. Bei D-MAC und C-MAC hat der Datenburst eine Datenrate von 20,25 Mbit/s, d.h. in den 10,3 μs lassen sich genau 204 Bit übertragen; etwas Übertragungskapazität muß hier für Übergangsbits vergeben werden.

Bei D2-MAC und D-MAC werden die Daten des Datenburst D duobinär codiert übertragen, und bei C-MAC erfolgt die Übertragung in 2-4-PSK-Modulation.

Auf dem Bereich a folgt in Fig. 1 - 3 ein Übergangsbereich b, an den sich eine Klemmphase - Bereich c -mit einem nachfolgenden weiteren Übergangsbereich d anschließt.

Der überwiegende Teil einer Zeile ist mit dem MAC-Signal, den komprimierten Chrominanz- und Luminanzkomponenten (Chrominanzsignal C; Bereich e und Luminanzsignal Y; Bereich g), belegt. Bei Kompressionsfaktoren von 3:2 für das Luminanzsignal Y und 3:1 für das Chrominanzsignal C wird die Chrominanz mit 349 Abtastwerten und die Luminanz mir 697 Abtastwerten übertragen.

Zwischen dem Chrominanzsignal C und dem Luminanzsignal Y liegt ein Übergangsbereich f, und weitere Übergangsbereiche h und i schließen sich an das Luminanzsignal Y an.

Die Klemmphase - Bereich c - sowie die Übergangsbereiche b, d, f, h und i sind bei den erläuterten Zeilensignalen allesamt berechenbar bzw. bekannt, und von diesem Umstand macht die Erfindung Gebrauch, um eine Reduktion der Übertragungsdatenrate von MAC-Fernsehsignalen zu erzielen.

Die Bildkomponenten - Chrominanzsignal C und Luminanzsignal Y - werden bei der Erfindung in an sich bekannter Weise bei einem Systemtakt von 20,25 MHz mit 8 Bit quantisiert übertragen. Die Daten im Datenburst D werden aus dem duobinär codierten bzw. 2 - 4 PSK-modulieten Signal zurückgewonnen und Bit für Bit übertragen, wodurch sich schon eine bedeutsame Datenreduktion ergibt.

Entscheidend ist nun, daß die berechenbaren Werte der Klemmphase c und der Übergangsbereiche b, d, f, h und i nur zum Teil oder überhaupt nicht übertragen werden, da sie auf der Empfängerseite berechnet und in das D2-MAC, D-MAC- oder C-MAC-Fernsehsignal eingefügt werden können. Dadurch ergibt sich eine weitere Datenreduktion, die eine Übertragungsrate von kleiner oder gleich 135,168 Mbit/s ermöglicht. Die Zeilen der vertikalen Austastlücke, die zum Teil digitale Daten (Zeile 625),Videotext, VPS-Daten oder Zusatzdaten enthalten, werden gegenbenenfalls gesondert behandelt. Die jeweiligen minimalen Übertragungsdatenraten errechnen sich aus dem Bedarf für eine Zeile wie folgt:

```
349 Abtastwerte Chrominanz       43,625 Mbit/s

    mit 8 Bit je Abtastwert


697 Abtastwerte Luminanz         87,125 Mbit/s

    mit 8 Bit je Abtastwert      _____

                        Video: 130,750 Mbit/s
                               ================
```

Bei einem anderen Kompressionsverhältnis ändert sich diese Datenrate nicht, lediglich die Aufteilung in Chrominanz und Luminanz ist anders.

```
105 Bit pro Zeile bei D2-MAC     1,640625 Mbit/s
                                 ================


204 Bit pro Zeile bei D-MAC und  3,187500 Mbit/s
                                 ================
    C-MAC
```

Damit ergibt sich die minimale Übertragungsrate (nur Bereiche a, g und e werden übertragen)

```
    für D2-MAC             zu 132,390625 Mbit/s

    für D-MAC und C-MAC zu 133,937500 Mbit/s
```

d.h. in beiden Fällen weniger als die zu erwartende Nettoübertragungsrate des H4-Kanals 135,168 Mbit/s. Bei Übertragung eines so in seiner Datenrate reduzierten D2-MAC-, D-MAC- oder C-MAC-Signals kann diese Nettodatenrate durch Stopfen erreicht werden.

Sofern die Übergangsbereiche, die insbesondere bei Scrambling benötigt werden, mit übertragen werden sollen, ist es erforderlich, weitere 21 Abtastwerte in den Bereichen d, f und h mit jeweils 8 Bit hinzuzufügen, also: 21 Abtastwerte Übergangsbereiche mit 8 Bit je Abtastwert, d.h. 2,625 Mbit/s. In diesem Fall ergibt sich die minimale Übertragungsrate für D2-MAC zu 135,015625 Mbit/s (für D-MAC und C-MAC zu 136,562500 Mbit/s).

Damit ist auch bei Scrambling zumindest das D2-MAC-Fernsehsignal innerhalb der Nettodatenrate des H4-Kanals (135,168 Mbit/s) übertragbar. Sogar der eine Abtastwert im Übergangsbereich i als Übergang zum digitalen Datenburst D könnte noch mit 8 Bit übertragen werden (ein Abtastwert im Bereich i mit 8 Bit (entspricht 0,125 Mbit/s). Die Übertragungsrate für D2-MAC-Fernsehsignale ergibt sich dann zu 135,140625 Mbit/s, unterschreitet also immer noch den Wert von 135,168 Mibt/s, wie sie als Nettodatenrate des H4-Kanals erwartet wird.

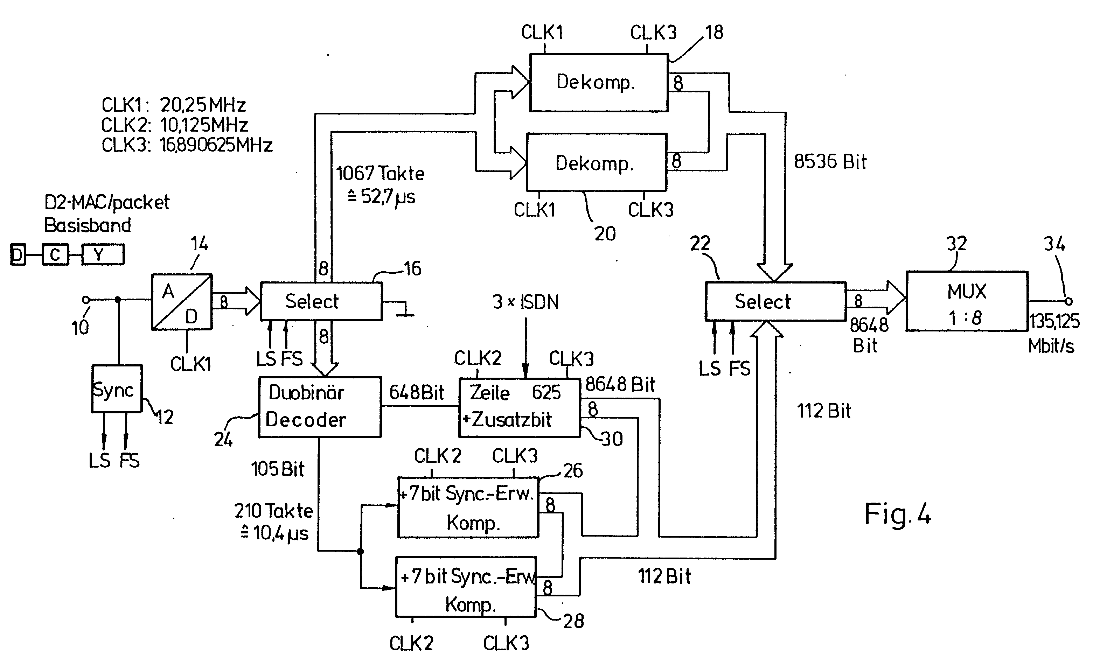

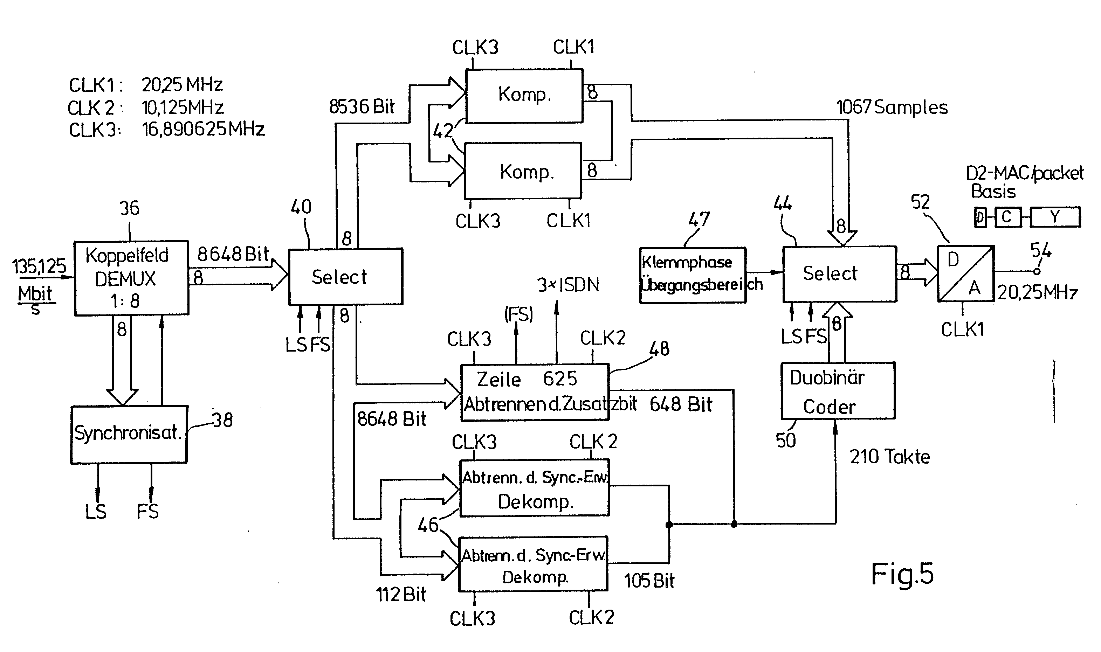

Der in Fig. 4 dargestellte Coder sowie der Decoder gemäß Fig. 5 unterscheiden sich nur geringfügig von den bekannten Coder und Decoder für D2-MAC- Fernsehsignale gemäß der eingangs erwähnten DE-OS 35 45 322.

Dem Coder in Fig. 4 wird an der Eingangsklemme 10 ein D2-MAC-Fernsehsignal zugeführt, welches einerseits zu einer Taktschaltung 12 und andererseits zu einem Analog-Digital-Wandler 14 gelangt. An den Analog-Digital-Wandler 14 schließt sich eine erste Auswahlschaltung 16 an.

Diese Auswahlschaltung 16 gibt die 8 Bit breiten Abtastwerte während 210 Clockperioden (Bereiche i, a) an die Datenverarbeitung; während 19 Clockperioden (Bereiche b, c) werden sie unterdrückt und während 1067 Clockperioden (Bereiche d, e, f, g, h) werden die Abtastwerte an die Videoverarbeitung gegeben (Summe der genannten Clockperioden = 1296).

Die 8536 Bit der Videoverarbeitung (1067 x 8 Bit) und die 112 Bit der Datenverarbeitung (einschließlich 7 Bit Synchronwort-Erweiterung) werden abwechselnd an den 1 : 8 - Multiplexer 32 am Coderausgang 34 gegeben und in den seriellen Datenstrom von 135,125 Mbit/s gewandelt.

In der im Prinzip bekannten Taktschaltung 12 werden Signale LS und FS erzeugt, welche die erste Auswahlschaltung 16 und eine zweite Auswahlschaltung 22 ansteuern. Wie schon erwähnt führt die erste Auswahlschaltung 16 den Datenteil einem Duobinär-Decoder 24 zu, der einerseits mit zwei Kompressionsschaltungen 26 und 28 und anderseits mit einer weiteren Kompressionsschaltung 30 verbunden ist.

Von der ersten Auswahlschaltung 16 wird der Videoteil einer Dekompressionsschaltung zugeführt, die durch zwei Schreib/Lese/Speicher 18, 20 gebildet ist, die zur zweiten Auswahlschaltung 22 führen.

Die Schreib/Lese-Speicher 18, 20 weisen jeweils die Kapazität einer Fernsehzeile auf. Die Dekompression erfolgt dadurch, daß die digitalen Signale mit dem Takt CLK1 in die Speicher eingelesen werden und mit einem Takt CLK3, dessen Frequenz geringer ist, aus den Speichern ausgelesen werden. Zu diesem Zweck werden Schreib/Lese-Speichern 18, 20 die erwähnten Taktsignale CLK1 und CLK3 zugeführt.

In dem Duobinär-Decoder 24 werden die duobinär codierten Signale des D2-MAC-Fernsehsignals in binär codierte Signale umgewandelt. Die 105 Bit, welche das D2-MAC-Signal im Bereich a aufweist, werden in den zeilenweise abwechselnd arbeitenden Schaltungen 26 und 28 um 7 Bit auf ein Vielfaches von 8 ergänzt und auf einen Zeitraum von 0,8 us komprimiert. Zu diesem Zweck werden die Signale mit dem Takt CLK2 von 10,125 MHz in die Kompressionsschaltungen 26 und 28 eingeschrieben und mit dem Takt CLK3 ausgelesen.

Die in D2-MAC-Signal in der 625. Zeile vorhandenen 648 Bit werden in der Schaltung 30 in entsprechender Weise komprimiert und mit Synchronworterweiterung, frei nutzbaren Zusatzbits und Stopfbits aufgefüllt, so daß am Ausgang der Schaltung 30 während der 625. Zeile 8648 Bit zur Verfügung stehen.

Von der zweiten Auswahlschaltung 22 werden die ihr zugeführten Daten der Dekompressionsschaltung 18, 20 und der Kompressionsschaltung 26, 28, 30 zusammengefügt und dem Multiplexer 32 zugeführt. Dieser ist als ein Parallel-Serien-Wandler arbeitender Multiplexer ausgeführt, an dessen Ausgang 34 ein digitales Signal zur Verfügung steht, welches für die Übertragung über Glasfasern geeignet ist.

Fig. 5 zeigt einen Decoder auf der Empfangsseite, welcher die digitalisierten D2-MAC-Fernsehsignale wieder in das ursprüngliche D2-MAC-Fernsehsignal umwandelt. Dabei werden in dem Decoder die fehlenden - nicht übertragenen - 19 Abtastwerte in Schaltung 47 berechnet und noch in der digitalen Ebene bei einer vierten Auswahlschaltung 44 in den Datenstrom eingefügt.

Die empfangenen digitalen Signale gelangen in Fig. 5 zunächst in ein Koppelfeld 36, welches einen Serien-Parallel-Wandler umfaßt. Das 8 Bit breite Ausgangssignal des Koppelfeldes 36 wird einerseits einer dritten Auswahlschaltung 40 und andererseits einer Synchronisierschaltung 38 zugeführt.

Die Synchronisierschaltung 38 steuert sowohl die dritte Auswahlschaltung 40 als auch die vierte Auswahlschaltung 44 an (LS und FS). Die dritte Auswahlschaltung 40 führt den Datenstrom während des Bildteils einer Zeile zu einer Kompressionsschaltung 42, während des Datenteils der Zeile zu einer Dekompressionsschaltung 46 und während der gesamten 625. Zeile zu einer Schaltung 48.

Die Kompressionsschaltung 42 ist in ähnlicher Weise wie die Dekompressionsschaltung 18, 20 bei dem Coder gemäß Fig. 3 aufgebaut. Ein Unterschied besteht allerdings darin, daß die Signale in die Kompressionsschaltung 42 mit dem Takt CLK3 eingeschrieben und mit dem Takt CLK1 - 20,25 MHz - ausgelesen und der vierten Auswahlschaltung 44 zugeführt werden.

Die Dekompressionsschaltung 46 und die Schaltung 48 führen umgekehrte Operationen wie die Schaltungen 26, 28 und 30 gemäß Fig. 4 aus.

Die Dekompressionsschaltung 46 sowie die Schaltung 48 führen zu einem Duobinär-Coder 50, durch welchen die digitalen Signalanteile in an sich bekannter Weise in die normgerechte duobinär codierte Form gebracht werden.

Durch die vierte Auswahlschaltung 44 werden der Bildteil und der Datenteil des D2-MAC-Signals sowie Übergangsbereich b und Klemmphase zusammengefaßt und dem Digital-Analog-Wandler 52 zugeführt, an dessen Ausgang 54 das ursprüngliche D2-MAC-Fernsehsignal zur Verfügung steht.

Bezüglich HD-MAC spricht man z. Z. von Digital Assited Television, indem pro Halbbild bis zu 21 Zeilen der vertikalen Austastlücke mit digitalen Zusatzdaten (20,25 Mbit/s momentane Datenrate, Gesamtkapazität 1,1 Mbit/s) gefüllt werden. Bei der hier skizzierten Glasfaserübertragung könnten die jeweils 1 067 Clockerperioden einer dieser Zeilen zur Übertragung von 8 536 Bit dienen. Jede dieser Zeilen stellt damit eine zusätzliche Kapazität von 213,4 kbit/s zur Verfügung, insgesamt also fast 9 Mbit/s, die von Glasfaser-HD-MAC-Empfängern ausgewertet werden können.

Der soweit beschriebene Coder und Decoder gemäß Fig. 4 und 5 betreffen ein D2-MAC-Fernsehsignal, das hier beispielhaft erläutert wurde. Grundsätzlich läßt sich die Erfindung in entsprechender Weise aber auch bei D-MAC- Fernsehsignalen, C-MAC-Fernsehsignalen und HD-MAC-Fernsehsignalen einsetzen.

**Ansprüche**

1. Verfahren zur digitalen Übertragung von MAC-Fernsehsignalen, insbesondere von D2-MAC-, D-MAC-, C-MAC-und HD-MAC-Fernsehsignalen, dessen Zeilensignale einen Datenburst, ein Chrominanzsignal, ein Luminanzsignal, eine Klemmphase sowie mehrere Übergangsbereiche umfassen, dadurch gekennzeichnet, daß mindestens der Datenburst (a bzw. D), das Chrominanzsignal (e bzw. C) und das Luminanzsignal (g bzw. Y) digital übertragen werden, und daß der Wert der nicht übertragenen Klemmphase (c) sowie die Signale der nicht übertragenen Übergangsbreiche (b, d, f, h und i) empfängerseitig zeitrichtig und synchron in digitaler Form zur Bildung des kompletten Zeilensignals in das Zeilensignal eingefügt werden.

2. Verfahren nach Anspruch 1, dadurch gekennzeichnet, daß die Signale der Übergangsbereiche (b, d, f, h, i) auf der Empfängerseite berechnet werden.

3. Verfahren nach Anspruch 1 und/oder 2, dadurch gekennzeichnet, daß das Chrominanzsignal (e bzw. C) und das Luminanzsignal (g bzw. Y) unabhängig vom Kompressionsfaktor bei einer vorgegebenen Abtastfrequenz von vorzugsweise 20,25 MHz mit vorzugsweise 8 Bit quantisiert übertragen werden.

4. Verfahren nach einem der vorhergehenden Ansprüche 1 - 3, dadurch gekennzeichnet, daß die Daten des Datenbursts (a bzw. D) bei D2-MAC, D-MAC und HD-MAC duobinär decodiert und dann mit dem restlichen Zeilensignal übertragen werden.

5. Verfahren nach einem der vorhergehenden Ansprüche 1 - 3, dadurch gekennzeichnet, daß die Daten des Datenbursts (a bzw. D) bei C-MAC 2 - 4 PSK (digitale Phasenmodulation) -demoduliert und dann mit dem restlichen Zeilensignal übertragen werden.

6. Verfahren nach einem der vorhergehenden Ansprüche 1 - 5, dadurch gekennzeichnet, daß die digitale Übertragung mit einer Übertragungsrate von kleiner oder gleich 135,168 Mbit/s erfolgt.

7. Verfahren nach Anspruch 6, dadurch gekennzeichnet, daß die Übertragung bei D2-MAC-Fernsehsignalen mit einer vorgegebenen minimalen Übertragungsrate von vorzugsweise 132,390625 Mbit/s erfolgt.

8. Verfahren nach Anspruch 6, dadurch gekennzeichnet, daß die Übertragung bei D-MAC- und C-MAC-Fernsehsignalen mit einer vorgegebenen minimalen Übertragungsrate von vorzugsweise 133,937500 Mbit/s erfolgt.

9. Verfahren nach Anspruch 7 und/oder 8, dadurch gekennzeichnet, daß durch Stopfen mit Füllsignalen eine vorgegebene Datenrate - insbesondere eine Datenrate von 135,168 Mbit/s - erreicht wird.

10. Verfahren nach einem der vorhergehenden Ansprüche 1 - 9, dadurch gekennzeichnet, daß bei Scrambling die dafür benötigten Übergangsbereiche (d, f und h) mit ebenfalls 8 Bit pro Abtastwert übertragen werden.

11. Verfahren nach Anspruch 10, dadurch gekennzeichnet, daß die Übertragung bei D2-MAC-Fernsehsignalen mit einer vorgegebenen minimalen Übertragungsrate von vorzugsweise 135,015625 Mbit/s erfolgt.

12. Verfahren nach einem der vorhergehenden Ansprüche 1 - 11, dadurch gekennzeichnet, daß die Daten der 625. Zeile komprimiert und mit Zusatzdaten auf die gleiche Datenmenge wie bei den Bildzeilen aufgefüllt wird.

13. Verfahren nach einem der vorhergehenden Ansprüche 1 - 12, dadurch gekennzeichnet, daß der Videoteil der Zeilen in der vertikalen Austastlücke, welcher zum Teil Videotext, VPS-Daten oder andere Daten enthält, gegebenenfalls gesondert behandelt wird, indem die jeweils verwendete Codierung (duobinär, biphase, o.ä.) aufgehoben wird, die so zurückgewonnenen Daten komprimiert und mit Zusatzdaten aufgefüllt werden.

14. Verfahren nach einem der vorhergehenden Ansprüche 1 - 13, dadurch gekennzeichnet, daß der Videoteil der Zeilen in der vertikalen Austastlücke, welcher empfängerseitig berechenbare Signale enthält oder nicht belegt ist, komplett zur Übertragung von Zusatzdaten zur Verfügung gestellt wird.

15. Verfahren nach einem der vorhergehenden Ansprüche 1 - 14, dadurch gekennzeichnet, daß die digitale Übertragung mittels Glasfaserkabel vorgenommen wird.

16. Schaltungsanordnung zur Übertragung digitaler MAC-Fernsehsignale, insbesondere D2-MAC-, D-MAC-, C-MAC- und HD-MAC-Fernsehsignale, über eine Übertragungsstrecke, mit einem Coder auf der Senderseite und einem Decoder auf der Empfängerseite der Übertragungsstrecke, sowie mit einer Multiplexschaltung vor der Übertragungsstrecke und einer Demultiplexschaltung hinter der Übertragungsstrecke, dadurch gekennzeichnet, daß der Coder eine erste Auswahlschaltung (16) umfaßt, durch welche bestimmte Signalteile (Klemmphase, Übergangsbereiche) unterdrückt werden.

17. Schaltungsanordnung nach Anspruch 16, dadurchgekennzeichnet, daß der ersten Auswahlschaltung (16) ein Analog-Digital-Wandler (14) vorgeschaltet ist.

18. Schaltungsanordnung nach Anspruch 16 und/oder 17, dadurch gekennzeichnet, daß das analoge MAC-Fernsehsignal einer Taktschaltung (12) zur Taktableitung und Impulserzeugung sowie dem Analog-Digital-Wandler (14) zugeführt ist.

19. Schaltungsanordnung nach einem der vorhergehenden Ansprüche 16 - 18, dadurch gekennzeichnet, daß ein erster Ausgang der ersten Auswahlschaltung (16) mit einer ersten Dekompressionsschaltung (18, 20) verbunden ist, dessen Signale einem ersten Eingang einer zweiten Auswahlschaltung (22) zugeführt sind.

20. Schaltungsanordnung nach Anspruch 19, dadurch gekennzeichnet, daß ein zweiter Ausgang der ersten Auswahlschaltung (16) über eine erste Kompressionsschaltung (26, 28) mit einem zweiten Eingang der zweiten Auswahlschaltung (22) verbunden ist, und daß in der Kompressionsschaltung (26, 28) eine passende Synchronwerterweiterung hinzugefügt wird.

21. Schaltungsanordnung nach Anspruch 20, dadurch gekennzeichnet, daß zwischen dem zweiten Ausgang der ersten Auswahlschaltung (16) und der Kompressionsschaltung (26, 28) ein Duobinär-Decoder (24) angeordnet ist.

22. Schaltungsanordnung nach Anspruch 21, dadurch gekennzeichnet, daß eine weitere Kompressionsschaltung (30) vorgesehen ist, welche die Signale einer nur für Daten vorgesehenen Zeilenperiode innnerhalb einer Vollbildperiode komprimiert und gegebenenfalls weitere Daten betreffende Signale hinzufügt.

23. Schaltungsanordnung nach einem der vorhergehenden Ansprüche 16 - 22, dadurch gekennzeichnet, daß die zweite Auswahlschaltung (22) mit einem Multiplexer (32) verbunden ist, von dessen Ausgang (34) die digitalen Signale zur Übertragungsstrecke geführt sind.

24. Schaltungsanordnung nach Anspruch 16, dadurch gekennzeichnet, daß der Decoder eingangsseitig ein Koppelfeld (36) umfaßt, dem die digitalen Signale am Ende der Übertragungsstrecke zugeführt sind, und daß das Koppelfeld (36) mit einer dritten Auswahlschaltung (40) und einer Synchronisierschaltung (38) verbunden ist.

25. Schaltungsanordnung nach Anspruch 24, dadurch gekennzeichnet, daß ein erster Ausgang der dritten Auswahlschaltung (40), die von der Synchronisierschaltung (38) steuerbar ist, über eine zweite Kompressionsschaltung (42) mit einem ersten Eingang einer vierten Auswahlschaltung (44) verbunden ist.

26. Schaltungsanordnung nach Anspruch 25, dadurch gekennzeichnet, daß ein zweiter Ausgang der dritten Auswahlschaltung (40) über eine zweite Dekompressionsschaltung (46) mit einem zweiten Eingang der vierten Auswahlschaltung (44) verbunden ist, und daß in der Dekompressionsschaltung (46) die Synchronworterweiterung abgetrennt wird.

27. Schaltungsanordnung nach Anspruch 26, dadurch gekennzeichnet, daß zwischen der zweiten Dekompressionsschaltung (46) und dem zweiten Eingang der vierten Auswahlschaltung (44) ein Duobinär-Coder (50) vorgesehen ist.

28. Schaltungsanordnung nach Anspruch 27, dadurch gekennzeichnet, daß parallel zur Dekompressionsschaltung (46) eine Schaltung (48) vorgesehen ist, die bei Zeilen, die vor der Codierung nur Daten enthielten, die zusätzlich eingefügten Daten und Stopfbits abtrennt und die Daten der ursprünglichen Zeile dekomprimiert.

29. Schaltungsanordnung nach einem der vorhergehenden Ansprüche 25 - 28, dadurch gekennzeichnet, daß ein dritter Eingang der vierten Auswahlschaltung (44) mit einer Schaltung (47) verbunden ist, die den Übergangsbereich (b) und die Klemmphase (c) bereitstellt.

30. Schaltungsanordnung nach einem der vorhergehenden Ansprüche 25 - 29, dadurch gekennzeichnet, daß die vierte Auswahlschaltung (44) mit einem Digital-Analog-Wandler (52) verbunden ist, an dessen Ausgang (54) das analoge MAC-Fernsehsignal zur Verfügung steht.

Fig.1

Clock: 20,25 MHz

a = 209 Clock-Perioden für 105 Bit Datenburst (Synchronisation und Daten)

b =   4 Clock-Perioden Übergang vom digitalen Datenburst

c =  15 Clock-Perioden Klemmphase auf 0,5 V

d =  10 Clock-Perioden Übergang zum Chrominanzsignal (für Scrambling)

e = 349 Clock-Perioden eines der beiden Chrominanzsignale U,V

f =   5 Clock-Perioden Übergang zwischen Chrominanz- und Luminanzsignal (für Scrambling)

g = 697 Clock-Perioden Luminanzsignal Y

h =   6 Clock-Perioden Übergang vom Luminanzsignal (für Scrambling)

i =   1 Clock-Periode Übergang zum digitalen Datenburst

 1296  Clock-Perioden

EP 0 316 603 A1

Fig.2

Fig.3

EP 0 316 603 A1

Fig. 4

EP 0 316 603 A1

EP 0 316 603 A1

CLK1: 20,25 MHz
CLK 2: 10,125 MHz
CLK3: 16,890625 MHz

CLK3     CLK1

Komp. 8

8536 Bit

42

Komp. 8

CLK3     CLK1

1067 Samples

D2-MAC/packet
Basis
D C Y

36        40        47        44        52        54

135,125 Mbit/s
Koppelfeld DEMUX 1:8
8648 Bit
8

Select
8
8

LS FS

Klemmphase
Übergangsbereich

Select
8

LS FS
8

D/A
CLK1
20,25 MHz

8

38
Synchronisat.

LS    FS

3×ISDN
(FS)

CLK3     CLK2        48
Zeile   625
Abtrennen d. Zusatzbit   648 Bit

8648 Bit

CLK3     CLK 2
Abtrenn. d. Sync-Erw.
Dekomp.

46

Abtrenn. d. Sync-Erw.
Dekomp.

105 Bit

Duobinär
Coder

50

210 Takte

112 Bit

CLK3     CLK2

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 033 306 (P.P. DELOGNE) * Seite 2, Zeile 26 - Seite 3, Zeile 11 * | 1,2,16 | H 04 N 11/04 |
| D,A | EP-A-0 226 802 (ROBERT BOSCH GmbH) * Spalte 2, Zeile 16 - Spalte 6, Zeile 7 * | 1,3-5, 12-15, 16,18 | |

**RECHERCHIERTE SACHGEBIETE (Int. Cl.4)**

H 04 N

Der vorliegende Recherchenbericht wurde für alle Patentansprüche erstellt

| Recherchenort | Abschlußdatum der Recherche | Prüfer |
|---|---|---|
| DEN HAAG | 18-01-1989 | PIGNIEZ T.J.P. |